# EUROPEAN PATENT APPLICATION

(11) **EP 4 825 898 A1**
(43) Date of publication of application: **21.10.2026**
(21) Application number: 24904228.4
(22) Date of filing: 10.12.2024
(51) Int. Cl.: C08J 5/22, B01D 67/00, B01D 61/42, B01D 71/82

(54) **DELAMINATION-FREE ION-EXCHANGE MEMBRANE FOR SALINE WATER ELECTROLYSIS, AND MANUFACTURING METHOD THEREFOR**

(30) Priority: 13.12.2023 KR 20230180891; 26.11.2024 KR 20240170979
(71) Applicant: Airrane Co., Ltd., Cheongju-si, Chungcheongbuk-do 28121 (KR)
(72) Inventor: LEE, Chang Hyun, Seongnam-si, Gyeonggi-do 13589 (KR); AHN, Ju Hee, Cheonan-si, Chungcheongnam-do 31116 (KR); HWANG, Kyeong Hwan, Cheonan-si, Chungcheongnam-do 31111 (KR)
(74) Representative: V.O.
(86) International application number: PCT/KR2024/020136
(87) International publication number: WO 2025/127663

(57) **Abstract**

The present invention relates to a delamination-free ion exchange membrane for saline water electrolysis in which different functional groups are simultaneously present in a single layer, and a method for manufacturing the same. This invention can solve a problem of interfacial resistance between different layers and a problem of interfacial delamination problem according to application of a saline water electrolysis process, enables thickness control of the ion exchange membrane during the manufacturing process, and improves electrochemical performance and durability.

## Description

### BACKGROUND OF THE INVENTION

### 1. FIELD

The present invention relates to a delamination-free ion exchange membrane for saline water electrolysis in which different functional groups are simultaneously present in a single layer, and a method for manufacturing the same.

### 2. DESCRIPTION OF RELATED ART

Saline water electrolysis is a chemical process of directly preparing a high value-added compound such as high-purity chlorine, hydrogen, and sodium hydroxide by applying electricity to an electrolytic cell composed of an ion exchange membrane and an electrode. The economic feasibility of the saltwater electrolysis process is determined by the energy input to produce the same amount of compounds, which is affected by the intrinsic resistance of the ion exchange membrane and the electrode, which are the main components constituting the electrolytic cell, and the interfacial resistance of the ion exchange membrane and the electrode.

The ion exchange membrane used in the saline water electrolysis process requires chemical resistance to strong acid and strong base, electrochemical stability, high ion conductivity, low interfacial resistance with an electrode, convenience in mass production, and the like, and a representative ion exchange membrane for commercial saline water electrolysis has high chemical resistance due to a chemically stable polytetrafluoroethylene (PTFE) main chain and excellent ion conductivity due to a distinct fine phase separation morphology between hydrophilic-hydrophobic (e.g. a Flemion series of Asahi Glass, based on perfluorinated ionomer having excellent ionic conductivity due to a clear fine phase separation morphology between hydrophilic and hydrophobic properties (e.g. F-8080, F-8081, F-9010), Aciplex-F series of Asahi Kasei (e.g. F-6808, F-7001), and Nafion series of Chemours (e.g. N2060, N2030, N982). In order to achieve high current efficiency and low energy consumption, the ion exchange membrane was developed in the form of a double layer structure including a carboxylic acid layer (Perfluorinated carboxylic acid (PFCA) having a carboxylic acid group (-COO⁻H⁺) having a high anion exclusion property as an ion exchanger and a sulfonic acid group (-SO₃⁻H⁺) having a low resistance as an ion exchanger in order to achieve high current efficiency and low energy consumption in terms of productivity and economic feasibility of a saline water electrolysis process.

When the ion exchange membrane is applied to the saline water electrolysis process, interlayer interfacial delamination occurs under abnormal driving conditions such as a difference in feed solution supplied to the negative electrode and the positive electrode, a current application that is not constant, and the like. This may act as a resistor, resulting in a decrease in electrochemical performance and a decrease in efficiency of the entire saline water electrolysis process.

Korean Patent Publication No. 2017-0113232 discloses a method for introducing various ion exchangers into a base membrane through a polymerization reaction of monomers after swelling a polymer electrolyte base membrane. However, since the ion exchange membrane disclosed in the above patent is also manufactured using a thermal compression or coating method, different ion exchangers are formed in a multi-layer structure, so that it is not possible to solve an interlayer interface delamination problem that occurs when driving in an abnormal condition mentioned above. In addition, when a fluorine-containing polymer having the different ion exchangers is used, there is a problem in that it is difficult to apply to an actual process because a membrane is not easily formed due to a characteristic that does not dissolve well in water.

As such, it is necessary to solve a problem such as an interlayer interface delamination problem that occurs in an ion exchange membrane in which different functional groups have a multilayer structure and a molding problem due to poor solubility of a material, and it is also necessary to improve the performance and durability of the ion exchange membrane.

### SUMMARY

One object of the present invention is to provide a delamination-free ion exchange membrane for saline water electrolysis capable of solving a problem of interfacial resistance between different layers generated in a conventional multilayer ion exchange membrane and an interfacial delamination problem according to application of a saline water electrolysis process.

Another object of the present invention is to provide a method for manufacturing a delamination-free ion exchange membrane for saline water electrolysis, capable of controlling the thickness of an ion exchange membrane during a manufacturing process and improving electrochemical performance and durability.

According to an aspect of the present invention, there is provided a method for manufacturing a delamination-free ion exchange membrane, comprising the steps: (i) providing an ionomer dispersion including different functional groups at the same time by performing supercritical dispersion of an ionomer precursor including different functional groups in a layered structure in a solvent; and (ii) forming an ion exchange membrane in which the different functional groups are blended in a single layer using the ionomer dispersion.

According to an embodiment, the different functional groups may be a carboxylic acid group and a sulfonic acid group, but are not limited thereto.

According to an embodiment, the ionomer precursor may be a perfluorinated ion exchange membrane including a double layer structure of a carboxylic acid layer and a sulfonic acid layer, but is not limited thereto.

According to an embodiment, the ionomer precursor may be a reinforced composite membrane further including a porous support, but is not limited thereto.

According to an embodiment, the ionomer precursor may be at least one selected from a commercialized multi-layered ion exchange membrane or an ion exchange membrane having a layered structure by chemical modification, but is not limited thereto.

According to an embodiment, the solvent may be a mixed solvent of alcohol and water.

According to an embodiment, the supercritical dispersion may have a temperature in a range of 100°C to 350°C and a pressure in a range of 20 psig to 2800 psig, but are not limited thereto.

According to an embodiment, the method may further include filtering the dispersion before the step of forming the ion exchange membrane to separate the insoluble component and the support fiber.

According to an embodiment, the forming of the ion exchange membrane may be performed by casting the ionomer dispersion on a substrate to form a free-standing membarne or impregnating the ionomer dispersion into a porous support to prepare a reinforced composite membrane.

According to an embodiment, the method for manufacturing the delamination-free ion exchange membrane may control the thickness of the ion exchange membrane to be in the range of 10 to 300 µm by changing the condition of the supercritical dispersion.

According to an embodiment, the ion exchange membrane produced by the manufacturing method may be applied to saline water electrolysis.

According to another aspect of the present invention, there is provided a delamination-free ion exchange membrane for water electrolysis in which different functional groups are simultaneously present in a single layer, wherein the different functional groups are a carboxylic acid group and a sulfonic acid group.

According to an embodiment, the delamination-free ion exchange membrane for saline water electrolysis may further include a porous support.

According to an embodiment, the porous support may be made of a polymer material selected from at least one of polytetrafluoroethylene, polyvinyl difluoroethylene, polyether ether ketone, polyethylene, and polypropylene, but is not limited thereto.

According to an embodiment, the delamination-free ion exchange membrane for saline water electrolysis may have a thickness in a range of 10 to 300 µm, but is not limited thereto.

According to the present disclosure, since the perfluorinated ionomer-based multilayer ion exchange membrane having different functional groups (PFSA/PFCA) may be prepared in a dispersed liquid phase including a carboxylic acid group (-COO⁻H⁺) and a sulfonic acid group (-SO₃⁻H⁺) in a blended form through a supercritical dispersion method, the form of the ion exchange membrane (the free-standing membarne or the reinforced composite membrane) and the thickness control may be easily controlled according to application characteristics, and the non-peelable ion exchange membrane manufactured based thereon may fundamentally block a different interlayer interfacial resistance problem and an interlayer delamination phenomenon occurring in an ion exchange membrane manufactured by an existing physical thermal fusion method. Through this, it is possible to improve the performance and durability of the ion exchange membrane.

The effects of the present invention are not limited to the effects mentioned above, and other effects that are not mentioned may be clearly understood by those skilled in the art from the following description.

### BRIEF DESCRIPTION OF DRAWINGS

FIG. 1a is a cross-sectional SEM image and EDX analysis results of the ion exchange membrane according to Comparative Example 1, and FIG. 1b is a cross-sectional SEM image and EDX analysis results of the ion exchange membrane according to Example 1.
FIG. 2a and 2b are graphs showing analysis results of surface XPS of the ion exchange membrane prepared in Example 1.
FIG. 3a and 3b are graphs showing analysis results of surface XPS of the ion exchange membrane prepared in Example 2.
FIG. 4a and 4b are graphs showing analysis results of surface XPS of an ion exchange membrane prepared in Example 3.
FIG. 5a and 5b are graphs showing analysis results of surface XPS of the ion exchange membrane prepared in Example 4.
FIG. 6a and 6b are graphs showing analysis results of surface XPS of the ion exchange membrane prepared in Example 5.
FIG. 7a and 7b are graphs showing analysis results of surface XPS of the ion exchange membrane prepared in Example 6.
FIG. 8a and 8b are graphs showing analysis results of surface XPS of the ion exchange membrane prepared in Example 7.
FIG. 9 is a graph showing current voltage characteristics of ion exchange membranes according to Examples and Comparative Examples.
FIG. 10 is a graph showing electrochemical durability through constant current application of ion exchange membranes according to Examples and Comparative Examples.

### DETAILED DESCRIPTION

According to the best mode of the present invention, there is provided a method for manufacturing a delamination-free ion exchange membrane, comprising the steps: (i) providing an ionomer dispersion including different functional groups at the same time by performing supercritical dispersion of an ionomer precursor including different functional groups in a layered structure in a solvent; and (ii) forming an ion exchange membrane in which the different functional groups are blended in a single layer using the ionomer dispersion. The different functional groups may be a carboxylic acid group(-COO⁻H⁺) and a sulfonic acid group(-SO₃⁻H⁺), but are not limited thereto.

According to an embodiment, a delamination-free ion exchange membrane may be an ion exchange membrane in which different functional groups are blended in a single layer, specifically, a perfluorinated ion exchange membrane that a carboxylic acid group and a sulfonic acid group are blended.

As such, the perfluorinated ion exchange membrane that different functional groups are simultaneously present in a single layer is suitable for use as an ion exchange membrane for saline water electrolysis, and has an excellent performance and durability owing to non-peelability.

Hereinafter, the present invention will be described in more detail with reference to embodiments. However, the following embodiments are exemplarily presented to help understanding of the present invention, and the scope of the present invention is not limited thereto. The present disclosure may apply various changes, may be implemented in various different forms, and should be understood to include all modifications, equivalents, and substitutes included in the spirit and scope of the present disclosure.

Unless otherwise defined, all terms used herein, including technical or scientific terms, have the same meaning as commonly understood by one of ordinary skill in the art to which the present disclosure pertains. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

A method for manufacturing a delamination-free ion exchange membrane, comprising the steps: (i) providing an ionomer dispersion including different functional groups at the same time by performing supercritical dispersion of an ionomer precursor including different functional groups in a layered structure in a solvent; and (ii) forming an ion exchange membrane in which the different functional groups are blended in a single layer using the ionomer dispersion. The different functional groups may be a carboxylic acid group(-COO⁻H⁺) and a sulfonic acid group(-SO₃⁻H⁺), but are not limited thereto.

The ion exchange membrane prepared by the manufacturing method may be a perfluorinated ion exchange membrane in which a carboxylic acid group and a sulfonic acid group, which are different functional groups, are blended in a single layer. As described above, the perfluorinated ion exchange membrane in which the different functional groups are simultaneously present in the single layer is suitable for use as an ion exchange membrane for saline water electrolysis, and exhibits delamination-free behavior, and thus has excellent performance and durability.

The delamination-free ion exchange membrane for saline water electrolysis according to the present invention may be a reinforced composite membrane including a free-standing membrane made of only ionomer or a porous support. In addition, the delamination-free ion exchange membrane for saline water electrolysis may have a thickness in the range of 10 to 300 µm, but is not limited thereto.

The ionomer precursor used in the preparation of the dispersion may be a perfluorinated ion exchange membrane including a double-layer structure of a carboxylic acid layer and a sulfonic acid layer. The perfluorinated ion exchange membrane used as the ionomer precursor may be a reinforced composite membrane including a pure membrane or a porous support.

In addition, a commercially available perfluorinated-based ion exchange membrane or a multilayer ion exchange membrane prepared directly by chemically modifying an ionomer may be used as an ionomer precursor without particular limitation to prepare an ionomer dispersion containing different functional groups.

In addition, the ion exchange membrane may be utilized in the present technology regardless of the standard and state of the ion exchange membrane, such as a defect occurring during the ion exchange membrane production process or an unused fraction generated by a difference in manufacturing-use standards.

Examples of ion exchange membranes having different functional layers include a Flemion series of Asahi Glass (e.g. F-8080, F-8081, F-9010), an Aciplex-F series of Asahi Kasei (e.g. F-6808, F-7001), and a Nafion series of Chemours (e.g. N2060, N2030, N982), and the like, but are not particularly limited thereto.

In addition, a solvent used to provide an ionomer dispersion containing different functional groups at the same time without a layered structure by supercritical dispersion of an ionomer precursor including different functional groups in a layered structure may be a mixed solvent of alcohol and water. The supercritical fluid at a critical point or higher exhibits similar solubility to liquid, very low surface tension, and permeability similar to gas, and the density of the supercritical fluid can improve dissolution performance. In the supercritical fluid, since the viscosity of the solute is low, material transfer may be promoted, and thus high solute diffusion of the ion exchange membrane may be exhibited.

The solubility for this particular solute may be further improved as the mixed solvent is introduced. In an embodiment of the present invention, alcohol was used together with water as a co-solvent in order to improve the polarity and solvation strength of the supercritical fluid through the formation of hydrogen bonds. Meanwhile, in order to prepare the ion exchange membrane with a dispersion, it is preferable that the content of the alcohol is higher than the content of the water in order to induce rapid volatilization of the solvent when the ion exchange membrane is manufactured later, and for example, it is suitable for the volume ratio of alcohol: water to 55: 45 to 99: 1.

The alcohol usable in the present invention may be, for example, methanol, ethanol, 1-propanol, isopropyl alcohol, butanol, isobutanol, 2-butanol, tert-butanol, n-pentanol, isopentyl alcohol, 2-methyl-1-butanol, neopentyl alcohol, diethyl carbinol, methyl propyl carbinol, methyl isopropyl carbinol, dimethyl ethyl carbinol, 1-hexanol, 2-hexanol, 3-hexanol, 2-methyl-1-pentanol, 3-methyl-1-pentanol, 4-methyl-1-pentanol, 2-methyl-2-pentanol, 3-methyl-2-pentanol, 4-methyl-2-pentanol, 2-methyl-3-pentanol, 3-methyl-3-pentanol, 2,2-dimethyl-1-butanol, 2,3-dimethyl-1-butanol, 2,3-dimethyl-2-butanol, 3,3-dimethyl-1-butanol, 2-ethyl-1-butanol, 1-heptanol, 2-heptanol, 3-heptanol, 4-heptanol, and mixtures thereof, but is not particularly limited thereto.

According to an embodiment, the temperature of the supercritical condition for preparing the high-concentration dispersion in which the carboxylic acid group (-COO⁻H⁺) and the sulfonic acid group (-SO₃⁻H⁺) are blended ranges from 100 to 350° C. and the pressure is preferably in the range of 20 to 2800 psig. When the temperature is less than 100°C or the reaction pressure is less than 20 psig, it is difficult to have uniform dispersion characteristics since the prepared dispersion exists in a partially dispersed state, and on the contrary, when the temperature exceeds 350°C or the pressure exceeds 2800 psig, high-temperature and highpressure reaction conditions must be maintained, and thus economic feasibility is low.

In the present invention, a specific temperature and pressure range for preparing a dispersion in a form in which a carboxylic acid group (-COO⁻H⁺) and a sulfonic acid group (-SO₃⁻H⁺) are blended may vary depending on the type and ratio of the ion exchange membrane material and the alcohol used, and the concentration of the dispersion may be adjusted depending on the purpose of use, and thus the utilization is very high.

As described above, the dispersion in the form in which the supercritical dispersed carboxylic acid group (-COO⁻H⁺) and the sulfonic acid group (-SO₃⁻H⁺) are blended exhibits unique dispersion characteristics, and when a single-layer ion exchange membrane prepared based thereon is introduced into an electrochemical cell, electrochemical performance and durability may be improved.

The ionomer dispersion in which a carboxylic acid group (-COO⁻H⁺) and a sulfonic acid group (-SO₃⁻H⁺) are blended in a blended solvent using a supercritical dispersion method is cooled and filtered to separate an insoluble component (e.g. a substrate, an inorganic additive, etc.). When the ionomer precursor is a reinforced composite membrane, the support fiber may also be separated through a filtration process.

The ionomer dispersion blended with the heterogeneous functional groups may be easily separated using a general filter paper, and filter paper having an average pore size of 0.45 to 10 µm may be used, but other filters or separation devices other than filter paper may be used, and there is no particular limitation. Meanwhile, the dispersion liquid passing through the filter paper or the filtration device is an ionomer dispersion in which a carboxylic acid group (-COO⁻ H⁺) and a sulfonic acid group (-SO₃⁻H⁺) are dispersed in a blended solvent composed of water and alcohol, and may include a small amount of a water-soluble material such as an antioxidant. Since an additive such as an antioxidant is a component used for manufacturing an ion exchange membrane, a dispersion containing a small amount of a water-soluble material such as an antioxidant may be used as it is in the preparation of an ion exchange membrane.

According to the present invention, an ion exchange membrane prepared using an ionomer dispersion in which a carboxylic acid group (-COO⁻H⁺) and a sulfonic acid group (-SO₃⁻H⁺) are dispersed in a blended form has excellent ion conductivity, and is prepared in a single-layer structure in which different types of functional groups are blended to secure non-peelability, thereby improving electrochemical performance and durability when applied to a battery or a water electrolysis device as an ion exchange membrane.

In addition, in the present invention, when the ion exchange membrane is manufactured using the dispersion in which different types of functional groups are blended, the thickness may be freely adjusted to 10 to 300 µm. As the ion exchange membrane becomes thick, as the ohmic resistance increases, the electrochemical performance of the battery or water electrolysis device into which the ion exchange membrane is introduced may be deteriorated, and in order to prevent this phenomenon, it is preferable to adjust the thickness to the maximum as much as possible at a level capable of maintaining the mechanical and chemical durability of the ion exchange membrane. The mechanical and chemical durability levels are different depending on the type of a battery or a water electrolysis device using an ion exchange membrane, and the thickness is adjusted according to each driving environment to manufacture an ion exchange membrane, thereby being used in various fields. Therefore, it is possible to contribute to the improvement of electrochemical performance by controlling the thickness of the ion exchange membrane prepared according to the present invention.

Meanwhile, according to the present invention, the dispersion in which the carboxylic acid group (-COO⁻H⁺) and the sulfonic acid group (-SO₃⁻H⁺) are dispersed is applied to the porous support to be manufactured in the form of a reinforced composite membrane, thereby improving the efficiency and chemical durability of the electrochemical reaction.

The step of forming the ion exchange membrane using the ionomer dispersion containing the different functional groups at the same time according to the present invention may be performed by, for example, casting the ionomer dispersion on a substrate to form a single layer membrane or impregnating the ionomer dispersion into a porous support to manufacture a reinforced composite membrane.

According to an embodiment, when the reinforced composite membrane is prepared using the ionomer dispersion containing the different functional groups at the same time, the usable porous support may be, for example, at least one selected from polytetrafluoroethylene, polyvinyl difluoroethylene, polyether ether ketone, polyethylene, and polypropylene, but is not limited thereto. In the present invention, unlike the existing double-layer ion exchange membrane, the dispersion is not manufactured through thermal fusion, but the dispersion is coated on the porous support, and the dispersion is filled in the pores. Accordingly, interfacial delamination occurring in the bilayer ion exchange membrane is prevented, and the lifespan of the ion exchange membrane is improved through securing mechanical properties and gas barrier properties, thereby contributing to improvement of electrochemical performance and durability.

Hereinafter, the present invention will be described in more detail through embodiments. However, the following examples are exemplarily presented to help understanding of the present disclosure, and the scope of the present disclosure should not be construed as being limited thereto.

### Example 1

1-propanol was selected as an alcohol solvent for preparing a dispersion in which a carboxylic acid group (-COO⁻H⁺) and a sulfonic acid group (-SO₃⁻H⁺) were dispersed in a blended form through a supercritical dispersion method using a perfluorinated ionomer-based multilayer ion exchange membrane having different functional groups (PFSA/PFCA), and was purchased from Aldrich Chemical Co. and prepared without further purification.

The Flemion (weight: 22.3 g, 9 wt. %) was added to a glass liner containing 123.8 g of 1-propanol and 101.2 g of ultrapure water (weight ratio 55: 45). A glass liner was mounted in a high pressure/high temperature reactor (4560 Mini-Bench Reactor System, PARR, USA), the reaction mixture of the reactor was heated to 350°C at a heating rate of 4.25°C min⁻¹, and when the pressure reached 2600 psig, the reaction was maintained for 3 hours. The mixture was slowly cooled under atmospheric pressure (14.7 psig) to obtain a dispersion. The dispersion was separated from the support fiber using a filter paper having an average pore size of 5 to 10 µm and filtered. In addition to the support fiber, centrifugation was performed at 4000 RPM for 15 minutes using a centrifuge (T04B, Hanil Science, Korea) to remove minerals.

For saline water electrolysis evaluation as a single-layer ion exchange membrane, an ion exchange membrane was prepared through a solution coating method using the dispersion prepared as described above. To this end, the prepared dispersion was cast on a surface-hydrophilized glass plate, solidified in a vacuum oven set to 50°C for 3 hours, and heat-treated at 210°C for 1 hour to prepare a film, and in this process, the film thickness was controlled to 50 µm.

### Example 2

A dispersion was prepared in the same manner as in Example 1, except that the reaction mixture of the reactor was heated to 250°C at a heating rate of 4.25°C min⁻¹ when the dispersion was prepared using a high-pressure/high-temperature reactor, and the reaction was maintained for 3 hours when the pressure reached 2600 psig, and a membrane was prepared in the same manner as in Example 1.

### Example 3

A dispersion was prepared in the same manner as in Example 1, except that the reaction mixture of the reactor was heated to 100°C at a heating rate of 4.25°C min⁻¹ when the dispersion was prepared using a high-pressure/high-temperature reactor, and when the pressure reached 2600 psig, the reaction was maintained for 3 hours, and a membrane was prepared in the same manner as in Example 1.

### Example 4

A dispersion was prepared in the same manner as in Example 1, except that the reaction mixture of the reactor was heated to 350°C at a heating rate of 4.25°C min⁻¹ using a highpressure/high-temperature reactor, and the reaction was maintained for 3 hours when the pressure reached 1300 psig.

### Example 5

A dispersion was prepared in the same manner as in Example 1, except that the reaction mixture of the reactor was heated to 350°C at a heating rate of 4.25°C min⁻¹ using a highpressure/high-temperature reactor, and the reaction was maintained for 3 hours when the pressure reached 30 psig.

### Example 6

A dispersion was prepared in the same manner as in Example 1, except that the reaction mixture of the reactor was heated to 250°Cat a heating rate of 4.25°C min⁻¹ using a highpressure/high-temperature reactor, and the reaction was maintained for 3 hours when the pressure reached 1000 psig.

### Example 7

A membrane was prepared in the same manner as in Example 1, except that in the preparation of an ion exchange membrane, a dispersion and a porous support were prepared together in a process of casting on a hydrophilized glass plate, and the ion exchange resin dispersion was impregnated into the porous reinforced composite membrane support at a temperature of 40°C or less for 1 hour or less.

### Comparative Example 1

Flemion from Asahi Glass was used.

### Comparative Example 2

A dispersion was prepared in the same manner as in Example 1, except that the temperature condition was 80° C. the pressure condition was normal, and the reaction was maintained for 3 hours using a high-pressure/high-temperature reactor, and a membrane was prepared in the same manner as in Example 1. The prepared dispersion was very low in concentration, and since the dispersion was not evenly dispersed in the solvent, there was a problem in dispersion characteristics, and the dispersion was not prepared as an ion exchange membrane.

### Experimental Example 1 SEM-EDX Analysis

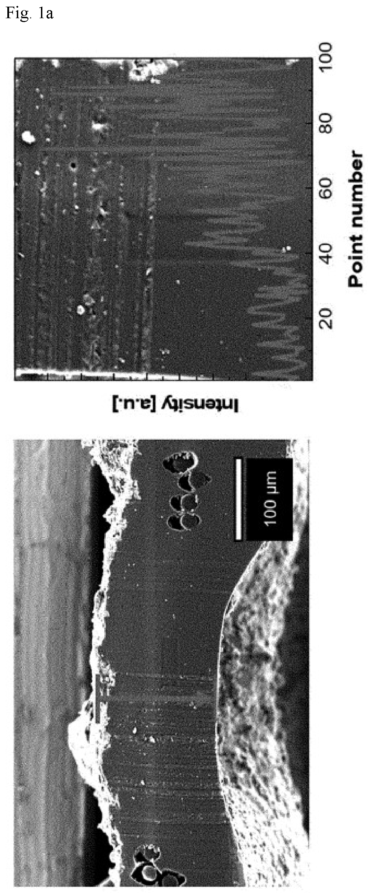

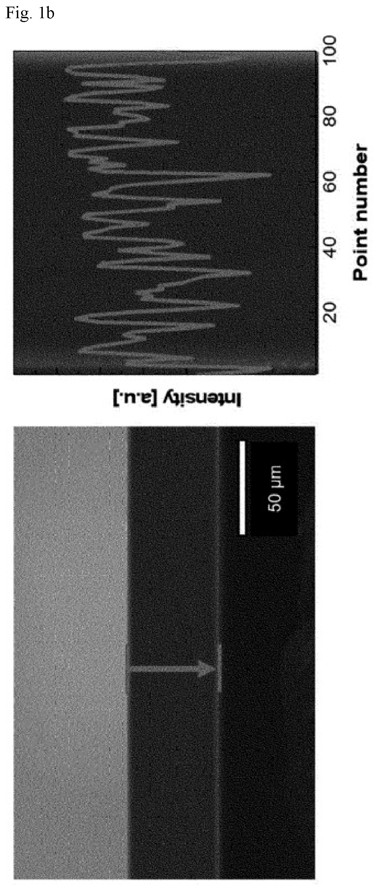

In order to observe a cross-section of the membrane prepared by the method of Comparative Example 1 and Example 1 and to confirm whether the membrane was manufactured as a single layer through an EDX line scan of Na⁺, a cross-sectional analysis through SEM-EDX was performed, and an SEM image was shown in FIG. 1 a and 1 b, respectively. Before the analysis, the membranes prepared by the methods of Comparative Example 1 and Example 1 were immersed in a 0.5 M NaCl aqueous solution for two days, and then immersed in ultrapure water for another two days and washed. This process is to confirm whether the single layer was manufactured by comparing Na⁺ between carboxylic acid group (weak acid) and sulfonic acid group (strong acid) with Na⁺ and binding strength between carboxylic acid group (weak acid) and sulfonic acid group (strong acid) by combining Na⁺ with carboxylic acid group and sulfonic acid group. In the case of Comparative Example 1, as shown in FIG. 1 a, it was confirmed that the binding strength of Na⁺ was stronger from the top to the bottom, and it was confirmed that the sulfonic acid base layer, which is a strong acid having strong binding strength, and the carboxylic acid base layer, which is a weak acid having a weak binding strength, were divided into a carboxylic acid base layer, which is a weak acid. On the other hand, in the case of Example 1, as shown in FIG. 1 b, it could be confirmed that the binding strength of Na⁺ is constant from the top to the bottom of the cross-section and is manufactured as a single layer.

### Experimental Example 2 XPS Analysis

Whether a sulfonic acid group and a carboxylic acid group are simultaneously present on the surface of the membrane prepared by the method of Examples 1 to 7 (E1 to E7) was examined, and a chemical structure analysis was performed through XPS to determine the presence or absence of the sulfonic acid group and the carboxylic acid group.

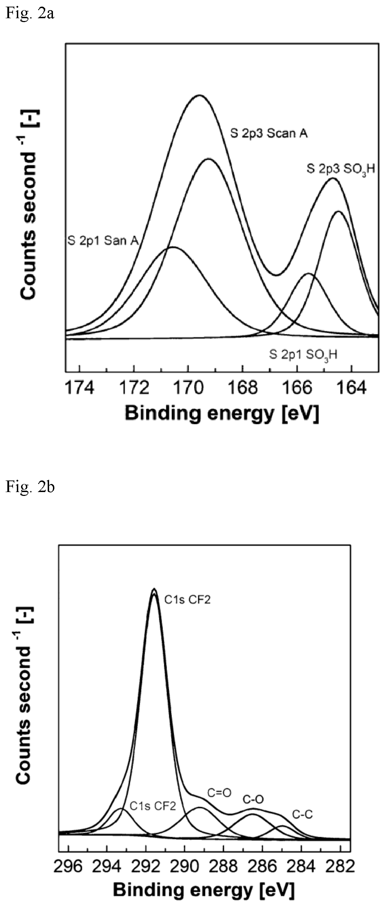

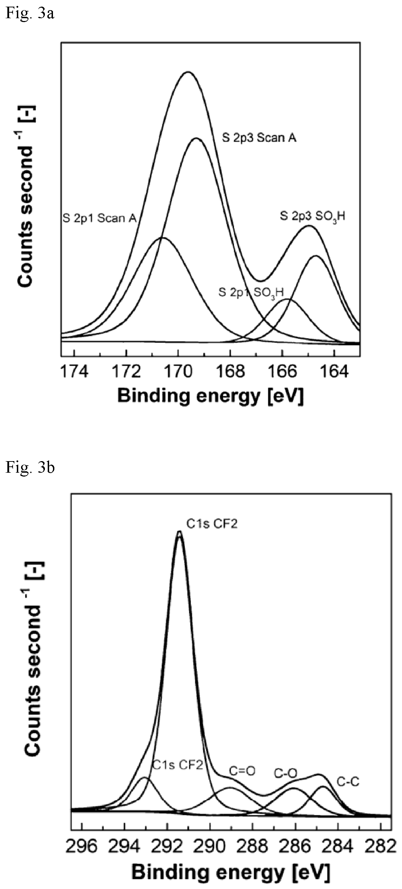

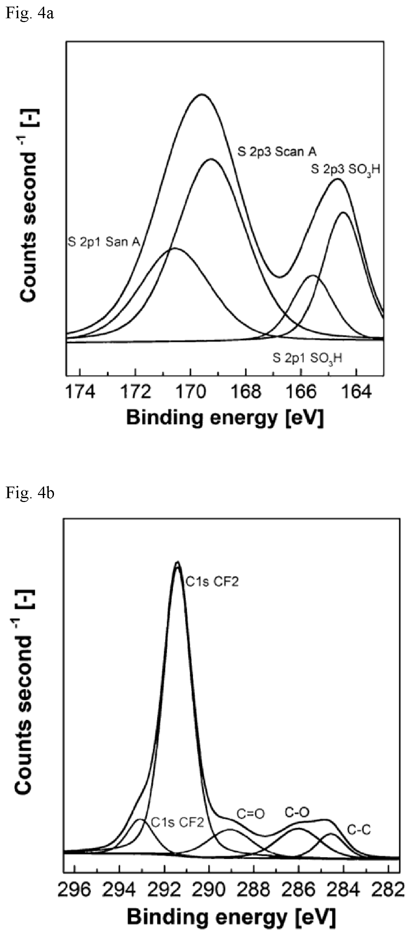

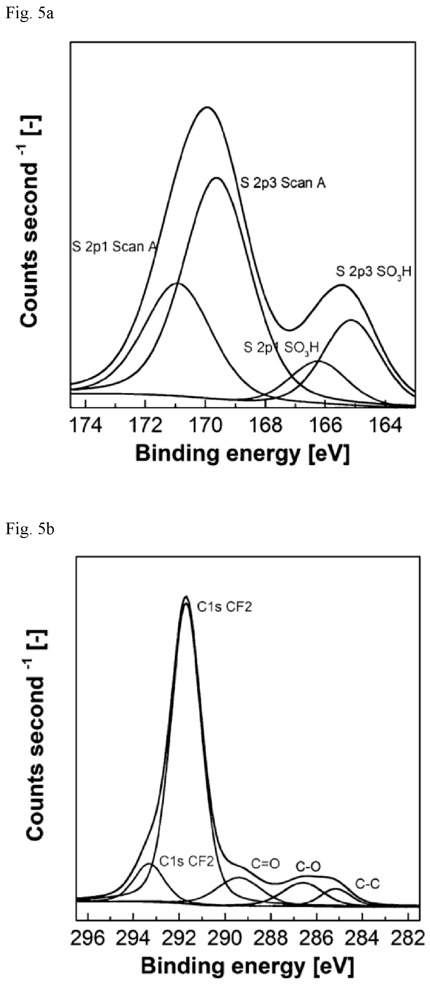

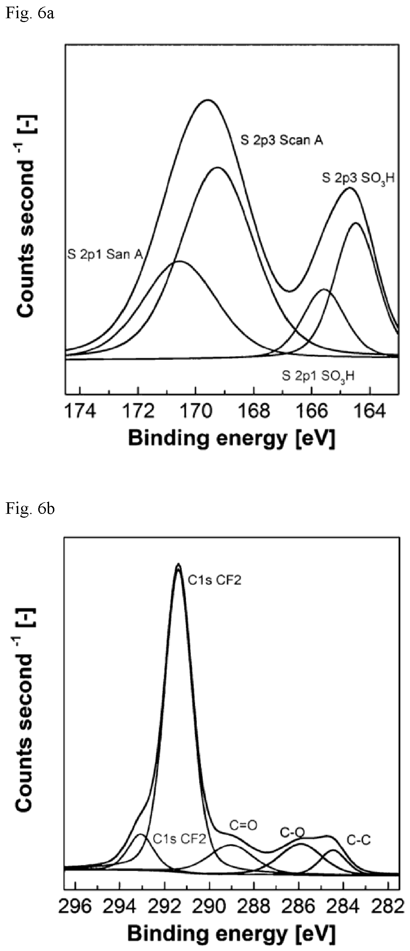

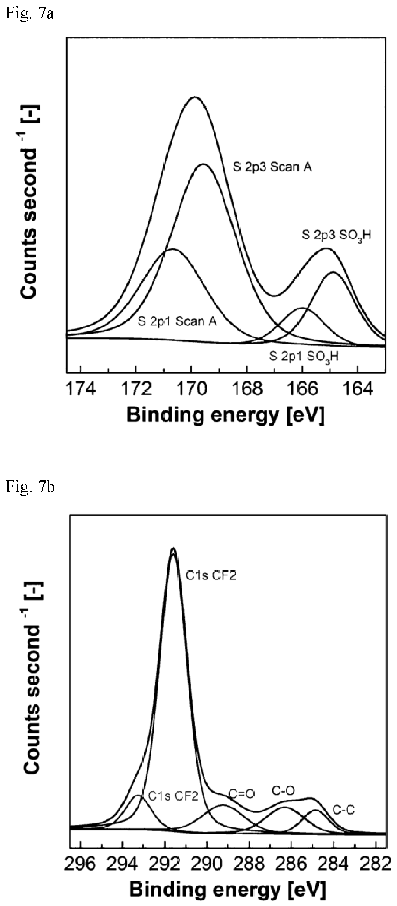

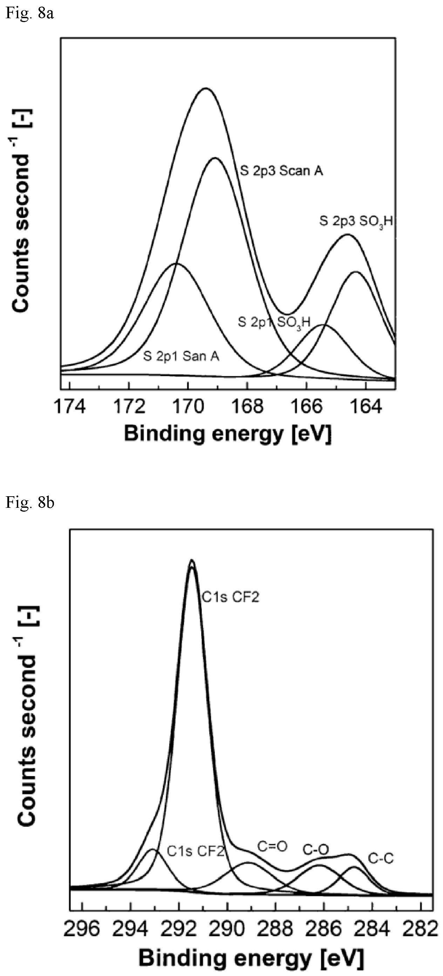

FIG. 2 a and 2 b are XPS analysis results of a film manufactured according to Example 1, FIG. 3 a and 3 b are XPS analysis results of Example 2, FIG. 4 a and 4 b are XPS analysis results of Example 3, FIG. 5 a and 5 b are XPS analysis results of Example 4, FIG. 6 a and 6 b are XPS analysis results of Example 5, FIG. 7 a and 7 b are XPS analysis results of Example 6, and FIG. 8 a and 8 b are XPS analysis results of Example 7. As shown in FIGS. 2 to 8, a sulfonic acid group was present through two peaks between 164 eV and 166 eV, and at the same time, a peak of the carboxylic acid group may be identified through a C=O peak of 288 eV and a C-O peak of 286 eV, and it was confirmed that these two were simultaneously present in the membrane.

### Experimental Example 3 Measurement of Ionic Conductivity

Na⁺ ion conductivity was measured using membranes prepared by the methods described in Examples 1 to 7 (E1 to E7) and Comparative Example 1 (C1) and a commercial film. The Na⁺ ion conductivity was calculated by Equation 1 after measuring ohmic resistance or bulk resistance using a four-point probe AC impedance spectroscopic method. [In Equation 1] $σ = L / RS$

[In Equation 1, σ: Na⁺ ion conductivity (S/cm), R: the ohmic resistance (Ω) of the polymer electrolyte, L: the distance (cm) between the electrodes, S: the area (cm) in the electrolyte through which the constant current flows], and the ionic conductivity measured at 90°C, which is the actual driving temperature of the brine electrolysis process for each embodiment, are shown in Table 1.²

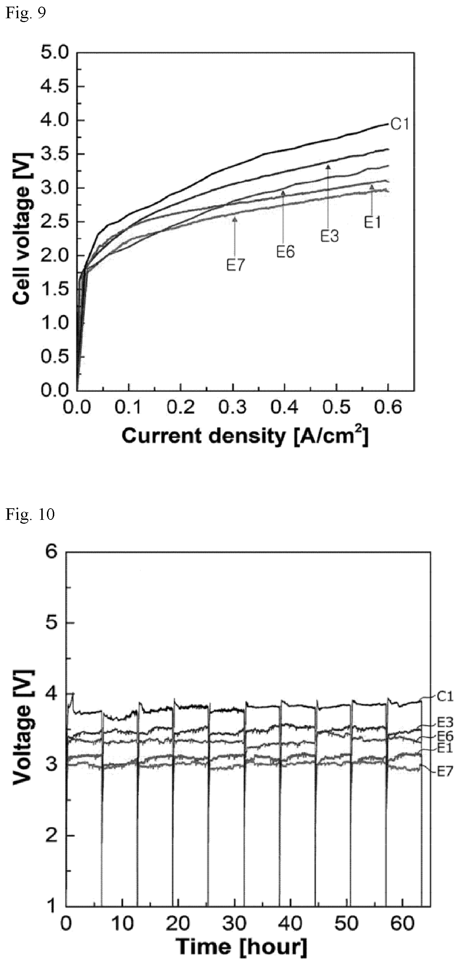

It can be seen from FIG. 9 that Examples 1 to 7 (E1 to E7), which are single layer films in which sulfonic acid groups and carboxylic acid groups are simultaneously present using a supercritical dispersion method, have improved conductivity with respect to Comparative Example 1 (C1), which is a representative commercial carboxylic acid group-sulfonic acid group bilayer film. In addition, Examples 2 and 3 with low temperature and Examples 3 and 4 with low pressure showed lower conductivity than Example 1, and in the case of Example 7 prepared as a reinforced composite membrane, it can be confirmed that the conductivity was higher than those of Examples 1 to 6.

**Table 1**

| Na⁺ion conductivity [S/cm] @90°C | |
|---|---|
| Example 1 | 0.087 |
| Example 2 | 0.08 |
| Example 3 | 0.064 |
| Example 4 | 0.078 |
| Example 5 | 0.064 |
| Example 6 | 0.082 |
| Example 7 | 0.096 |
| Comparative Example 7 | 0.017 |

### Experimental Example 4 Current Voltage Characteristics

When membranes prepared by the methods described in Examples 1, 3, 6, 7 (E1, E3, E6, and E7) and Comparative Example 1 (C1) were applied to a unit cell, the voltage was measured by applying the current density in the range of 0 to 0.6 A/cm.

A solution with a pH 2, obtained by adding 0.02 M HCl to a 25 wt% NaCl aqueous solution, was circulated at a flow rate of 1000 ml/min to the anode, and a 30.7 wt% NaOH aqueous solution was circulated at a flow rate of 500 ml/min to the cathode, and the cell and overall process temperature was set to 90°C, after which current was applied.

It can be confirmed through FIG. 9 that Examples 1, 3, 6, and 7, which are single layer membranes in which sulfonic acid groups and carboxylic acid groups are simultaneously present, compared to Comparative Example 1, which is a commercial carboxylic acid group-sulfonic acid group bilayer membrane, show lower voltages and thus have further improved unit cell performance. In addition, in the case of Example 7 prepared as the reinforced composite membrane, it was confirmed that the lower voltage was exhibited compared to Examples 1, 3, and 6, and Examples 3 and 6 in which the temperature and the pressure were adjusted to be low were higher than those in Example 1, indicating that the unit cell performance was low.

### Experimental Example 5 Electrochemical Durability

For membranes and commercial membranes prepared by the methods described in Examples 1, 3, 6, 7 (E1, E3, E6, and E7) and Comparative Example 1 (C1), electrochemical acceleration conditions in which the application of a current density of 0.6 A/cm was maintained for 6 hours under the driving conditions as in Experimental Example 4 and the application of current density for 6 hours was stopped, and the application was repeated 10 times to confirm electrochemical durability. In order to prevent the movement of OH⁻ from the cathode to the anode due to the concentration difference for 6 hours in which the application of current density was stopped, deionized water was flowed into each Anode and Cathode.

It can be seen that Examples 1, 3, 6, and 7, which are single layer membranes in which sulfonic acid groups and carboxylic acid groups exist at the same time compared to Comparative Example 1, which is a commercial carboxylic acid group-sulfonic acid group bilayer membrane, were driven at a low voltage and had no voltage rise during the same time, and thus, it was found that the electrochemical performance was improved because it had durability similar to or better than Comparative Example 1 and maintained low voltage. Referring to FIG. 10, it can be seen that Examples 3 and 6 having low temperature and pressure were driven at higher voltages as in Experimental Example 4, and Example 7 in the form of a reinforced membrane was driven at a lower voltage than other Examples 1, 3, 6, and 7 to have improved electrochemical performance.

From the above description, those skilled in the art to which the present disclosure pertains will understand that the present disclosure may be implemented in other specific forms without changing the technical spirit or essential features thereof. In this regard, it should be understood that the embodiments described above are illustrative and not restrictive in all aspects. The scope of the present invention should be construed as including all changes or modifications derived from the meaning and scope of the claims to be described later and the equivalent concept thereof rather than the detailed description.

## Claims

1. A method for manufacturing a delamination-free ion exchange membrane, comprising the steps: (i) providing an ionomer dispersion including different functional groups at the same time by performing supercritical dispersion of an ionomer precursor including different functional groups in a layered structure in a solvent; and (ii) forming an ion exchange membrane in which the different functional groups are blended in a single layer using the ionomer dispersion.

2. The method of claim 1, wherein the different functional groups are a carboxylic acid group and a sulfonic acid group.

3. The method of claim 1, wherein the ionomer precursor is a perfluorinated ion exchange membrane including a double-layer structure of a carboxylic acid layer and a sulfonic acid layer.

4. The method of claim 3, the ionomer precursor may be a reinforced composite membrane further including a porous support.

5. The method of claim 1, the solvent is a mixed solvent of alcohol and water.

6. The method of claim 1, wherein a temperature of the supercritical dispersion is in a range of 100°C to 350°C and a pressure is in a range of 20 psig to 2800 psig.

7. The method of claim 1, further comprising the step: before the forming of the ion exchange membrane, separating the insoluble component and the support fiber by filtering the dispersion.

8. The method of claim 1, the forming of the ion exchange membrane may be performed by casting the ionomer dispersion on a substrate to form a free-standing membrane or impregnating the ionomer dispersion into a porous support to form a reinforced composite membrane.

9. The method of claim 1, the thickness of the ion exchange membrane is controlled in the range of 10 to 300 µm by changing the condition of the supercritical dispersion.

10. The method of claim 1, wherein the ion exchange membrane is applied to saline water electrolysis.

11. A perfluorinated delamination-free ion exchange membrane for saline water electrolysis in which different functional groups are simultaneously present in a single layer, wherein the different functional group are a carboxylic acid group and a sulfonic acid group.

12. The delamination-free ion exchange membrane of claim 11, the delamination-free ion exchange membrane for saline water electrolysis further includes a porous support.

13. The delamination-free ion exchange membrane of claim 12, wherein the porous support is made of at least one polymer material selected from polytetrafluoroethylene, polyvinyl difluoroethylene, polyether ether ketone, polyethylene, and polypropylene.

14. The delamination-free ion exchange membrane of claim 11, the delamination-free ion exchange membrane for saline water electrolysis has a thickness in the range of 10 to 300 µm.
